Europäisches Patentamt

European Patent Office

Office européen des brevets

(11) Publication number: **0 177 134**
**A2**

# (12) EUROPEAN PATENT APPLICATION

(21) Application number: **85305376.7**

(22) Date of filing: **29.07.85**

(51) Int. Cl.⁴: **G 02 B 27/00**
**G 02 F 1/13**

(30) Priority: **31.08.84 US 646148**

(43) Date of publication of application:
**09.04.86 Bulletin 86/15**

(84) Designated Contracting States:
**DE FR GB IT**

(71) Applicant: **GENERAL MOTORS CORPORATION**
**General Motors Building 3044 West Grand Boulevard**
**Detroit Michigan 48202(US)**

(72) Inventor: **Lopez, Frank Sam**
**8209 Otis**
**Warren Michigan 48091(US)**

(74) Representative: **Denton, Michael John et al,**
**Patent Section - Luton Office (F6) Vauxhall Motors**
**Limited P.O. Box 3 Kimpton Road**
**Luton Bedfordshire LU2 0SY(GB)**

(54) **Liquid crystal head-up display.**

(57) A heads up liquid crystal display including a twisted nematic liquid crystal panel (24) mounted behind a vehicle windshield (12) in the field of view of the operator. The display panel has crossed polarizers (26, 28) and is normally transparent so the operator can view all or part of the scene ahead of the vehicle through the display. Electrically activated display segments selectively form opaque portions on the display panel so that information is presented to the operator as a pattern of dark images in the viewing area. For viewing at nighttime, ambient light is supplemented by artificial light passing through the display panel.

*Fig. 2*

Croydon Printing Company Ltd

LIQUID CRYSTAL HEADS UP DISPLAY

This invention relates to a heads up display for a vehicle such as an automobile, and more particularly, to a liquid crystal heads up display.

It has been proposed previously to provide at least some of the information usually presented on the instrument panel of an automobile, or even an airplane, in the region of the vehicle windshield so that the information is conveniently viewable while the operator is looking toward or through the windshield. See, for example, US Patent No. 4190832. It is desirable that such displays be positioned in the normal operator's field of view or just adjacent that field of view for the sake of convenience and it should not obstruct the field of view or distract the operator's attention from the view. In order for it to be practical, the display must be legible in both day and night operation.

It is an object of this invention to provide a heads up display in or adjacent an operator's field of view which display is predominantly transparent so that the scene before the vehicle may be viewed through the display.

The invention is carried out by a display panel mounted behind a vehicle windshield either fully or partially in the field of view of the operator, the panel comprising a twisted nematic liquid crystal cell having crossed polarizers on either side of the cell so that when the cell is not activated, it is clear to allow viewing through the cell and when electronically activated opaque areas provide visible information patterns. The invention also comprehends a light source in front of the cell to render the opaque pattern visible at night.

This invention is further described, by way of example, with reference to the accompanying drawings wherein like reference numerals refer to like parts and wherein:-

Figure 1 is a rear elevational view of a heads up display mounted behind the automotive vehicle windshield according to the invention;

Figure 2 is a side view of the heads up display of Figure 1; and,

Figure 3 is an exploded view of the heads up display panel of Figure 1.

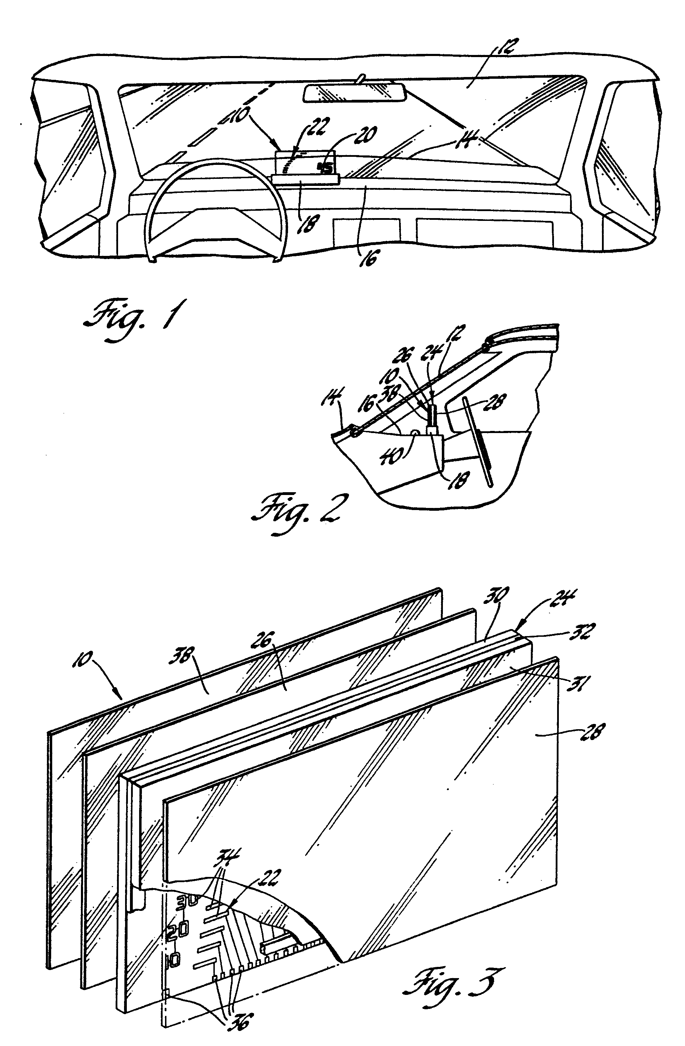

While the present invention is described herein as applied to an automobile, it is also applicable to other vehicles. In Figure 1, a heads up liquid crystal display (LCD) panel 10 is illustrated from the viewpoint of the vehicle operator sitting behind the display panel 10 and looking through the windshield 12 to view the front 14 of the vehicle and the highway in front of the vehicle. The field of view of the operator as used in this specification means the field defined by the windshield 12, particularly on the operator's side of the vehicle, and including a portion of a dashboard 16 immediately to the rear of the windshield.

As shown in Figures 1 and 2, the display panel 10 includes a base 18 which is supported on the dashboard 16 to the rear of the windshield 12. The display panel 10 is predominantly transparent to front illumination and is positioned so that when viewed by the operator the light passing from the windshield to the operator passes through the display; i.e., the operator can see through the display panel 10 to view the roadway or the front of the vehicle. According to the drawings, the display panel does not completely cover the field of view, although as a matter of design choice that can be accomplished within the spirit of the invention. On the other hand, if desired, the design may limit the display to a fringe area of the field of view. Figure 1 depicts the display panel as showing vehicle speed in both a digital form 20 and analogue graphical form 22, however, it is apparent that other speed display formats can be used or other types of information may be displayed in the heads up display panel 10.

As shown in Figure 3, without the base 18 the transparent LCD 10 comprises a conventional twisted nematic LCD cell 24 with crossed front and rear polarizers 26 and 28, respectively. The cell comprises front and rear glass plates 30 and 31 respectivly, spaced by a peripheral seal 32 with the twisted nematic liquid crystal material between the plates 30 and 31. The liquid crystal material, when not energized by an electrical field, rotates the polarized plane of the light passing through the front polarizer 26 so that it aligns with the direction of polarization of the rear polarizer 28 thereby passing the light to the driver. If, for example, the polarizer 26 is vertically polarized, the light will pass to the driver if the rear polarizer 28 is horizontally polarized. By applying an electrical field across a portion of the cell, the light rotating ability is disrupted so that any such portion of the cell becomes opaque. As illustrated, transparent electrodes 34 representing the numerals and the marker segments of the analogue display 22 are arranged on the inner surface of the front glass plate 30, while the inner surface of the rear glass plate 31 carries cooperating electrodes, not shown, so that the desired visual patterns are formed. Each of the electrode segments 34 is connected to a connector pad 36 at the edge of a plate 30 or 31, which cooperates with an electrical connector, not shown, in the base 18 so that electronic driving circuitry, also not shown, can selectively energize segments of the display panel to present the information to the operator in the form of a dark pattern against the otherwise normal view of the roadway or other scene being transmitted through the windshield 12. If both polarizing sheets 26 and 28 are coextensive with the edge of the cell 24 in the region of the seal 32, then a dark border would appear around the edge of the display panel. Preferably, at least one of the polarizing sheets does not cover the region of the seal and the seal comprises a clear material so that the border for the display panel will be transparent also.

To render the display legible at night, two further elements are included in the display. First, a light panel in the form of a clear plastic sheet 38, which glows in the presence of ultraviolet light, is secured to the front of the front polarizer 26 and second, an ultraviolet lamp 40, as shown in Figure 2, is positioned on the dashboard 16 between the windshield 12 and the display panel 10 to illuminate the sheet 38. The sheet 38 may comprise, for example, a clear polymer doped with particles of tungsten trioxide. When exposed to ultraviolet radiation, this material will emit visible light through the display panel 10 except where the activated segments render display portions opaque so that a dark pattern is visible. The glow from the light panel 38 is sufficiently dim that it does not detract from the highway scene to be viewed through the windshield, and preferably the output of the ultraviolet lamp 40 is manually adjustable for operator selection of the optimum brightness for a given condition. Other types of lighting can be employed to illuminate a light panel. Alternatively, a diffuser layer illuminated by visible radiation can be used in place of a light panel 38.

It will thus be seen that this invention provides a heads up LCD display panel which is viewable both in daylight and darkness to provide convenient and comfortable viewing of information in the vehicle operator's field of view. Frontal illumination renders the display visible and the source of that illumination is the ambient light from the scene being observed which if necessary is supplemented by artificial light.

Claims:-

1. A heads up display for presenting information in the field of view of a vehicle operator characterised by a predominantly transparent liquid crystal display panel (10) mounted to the rear of the vehicle windshield (12) for frontal illumination by light passing through the windshield, the panel being positioned in the operator's field of view; the display panel comprising a twisted nematic liquid crystal cell (4) including energizing electrodes (34) for actuating portions of the display panel and crossed polarizing filters (26,28) on opposite sides of the cell so that only activated portions of the display panel are opaque to the frontal illumination thereby presenting information in the form of dark patterns in the operator's field of view.

2. A heads up display as claimed in Claim 1, characterised by supplemental lighting for the display panel (10) comprising a source of radiation (40) and a layer (38) of material in front of the front polarizing filter (26) responsive to the source of radiation for directing light through the display panel to render the dark patterns visible.

3. A heads up display as claimed in Claim 2, characterised by the layer (38) of material in front of the front polarizing filter (26) comprising a layer of clear material which emits visible light when energized by ultraviolet radiation to further illuminate the display panel, and an ultraviolet source for irradiating the material provides the source of radiation (40).

*Fig. 1*

*Fig. 2*

*Fig. 3*